# EUROPEAN PATENT SPECIFICATION

(11) **EP 3 049 686 B1**
(45) Date of publication and mention of the grant of the patent: **04.05.2022**
(21) Application number: 14849465.1
(22) Date of filing: 24.09.2014
(51) Int. Cl.: F16D 27/02, F16H 63/30, F16H 3/12

(54) **ELECTRONIC, HIGH-EFFICIENCY VEHICULAR TRANSMISSION, OVERRUNNING, NON-FRICTION COUPLING AND CONTROL ASSEMBLY AND SWITCHABLE LINEAR ACTUATOR DEVICE FOR USE THEREIN**
ELEKTRONISCHE HOCHEFFIZIENTE REIBUNGSLOSE FREILAUFKUPPLUNG FÜR FAHRZEUGGETRIEBE UND STEUERUNGSANORDNUNG SOWIE SCHALTBARER LINEARANTRIEB ZUR VERWENDUNG DARIN
TRANSMISSION ÉLECTRONIQUE À HAUT RENDEMENT POUR VÉHICULE, ENSEMBLE DE COMMANDE ET D'EMBRAYAGE SANS FRICTION À DÉPASSEMENT, ET DISPOSITIF À ACTIONNEUR LINÉAIRE COMMUTABLE DESTINÉ À ÊTRE UTILISÉ DANS CET ENSEMBLE ET CETTE TRANSMISSION

(30) Priority: 26.09.2013 US 201361882694 P; 27.01.2014 US 201461931773 P; 16.09.2014 US 201414487234
(43) Date of publication of application: 03.08.2016
(73) Proprietor: Means Industries, Inc., Saginaw, MI 48601-2893 (US)
(72) Inventor: KIMES, John W., Wayne, Michigan 48184 (US); MCCLEER, Patrick J., Jackson, Michigan 49203 (US)
(74) Representative: Miller, James Lionel Woolverton
(86) International application number: PCT/US2014/057140
(87) International publication number: WO 2015/048082

(56) References cited:
- EP-A1- 1 710 478
- GB-A- 2 437 299
- US-A- 5 827 148
- US-A1- 2012 145 505
- US-B2- 6 827 167
- US-B2- 7 093 512
- US-B2- 7 898 121
- US-B2- 7 942 781
- US-B2- 8 443 956

## Description

### CROSS-REFERENCE TO RELATED APPLICATIONS

### TECHNICAL FIELD

This invention relates to:
1) switchable linear actuator devices to control the operating mode of one or more non-friction coupling assemblies;
2) overrunning, non-friction coupling and control assemblies;

### Overview

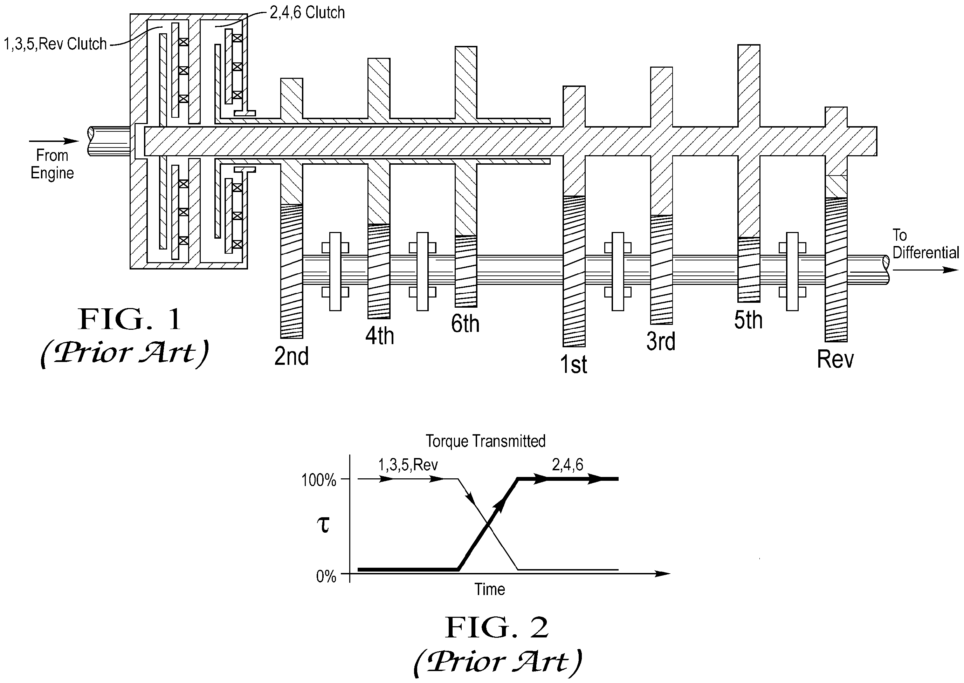

A dual-clutch transmission, (DCT) (sometimes referred to as a twin-clutch gearbox or double-clutch transmission), is a type of semi-automatic or automated manual automotive transmission. Referring to Figure 1, dual clutch arrangements for dual clutch transmissions are commonly known. In a dual clutch transmission the gears are divided between two parallel gear trains, in such a way that the odd gears (and reverse) are assigned to one gear train and the even gears to the other gear train. A separate friction clutch is furthermore assigned to the input side of each gear train. The two friction clutches form a dual clutch arrangement, which is arranged between an engine (usually an internal combustion engine) and the dual clutch transmission.

When a gear is engaged in one gear train and the associated friction clutch is closed, an adjacent gear may already be engaged in the other gear train. On disengagement and opening of the friction clutch for the original gear, the friction clutch for the target gear is closed with a degree of overlap, so that a gear change can take place with no interruption in tractive force as shown in Figure 2.

A typical multi-speed, dual clutch transmission uses a combination of two friction clutches and several dog clutch synchronizers as shown in Figure 1 to achieve "continuous torque" or dynamic shifts by alternating between one friction clutch and the other, with the synchronizers being "pre-selected" for the oncoming ratio prior to actually making the dynamic shift. "Continuous torque" shifting means that torque flow from the engine need not be interrupted prior to making the shift. This concept typically uses countershaft gears with a different, dedicated gear pair or set to achieve each forward speed ratio. Typically an electronically controlled hydraulic control circuit or system is employed to control solenoids and valve assemblies. The solenoid and valve assemblies actuate clutches and synchronizers to achieve the forward and reverse gear ratios.

DCT's offer substantial efficiencies by eliminating the hydraulics in a transmission. The result is large reductions in parasitic losses and substantial fuel economy improvements. However, the fuel economy benefits are often muted by:
- Drivability issues - launch shudder, sustained creep, parking lot maneuvers, rock cycling, clutch to clutch shifts, roll back
- NVH Issues
- Cost - Electro-mechanical systems (4 motors) just for shifting function, expensive gears
- Reliability/Durability - Complexity of systems like the MAM, synchronizers, and friction materials.

U.S. Patent No. 7,942,781 discloses a high-efficiency vehicular transmission. The transmission includes a transmission housing, a set of torque delivery elements which include first and second elements supported for rotation within the housing and an electric motor for changing angular velocity of at least one of the elements in response to an electrical signal during a shift to obtain a desired transmission ratio. At least one non-friction controllable coupling assembly has a coupling state for coupling the first element to either the second element or the housing and an uncoupling state for uncoupling the first element from either the second element or the housing, respectively. The at least one coupling assembly is non-hydraulically controlled to change state to maintain the desired transmission ratio.

A typical one-way clutch (OWC) consists of an inner ring, an outer ring and a locking device between the two rings. The one-way clutch is designed to lock in one direction and to allow free rotation in the other direction. Two types of one-way clutches often used in vehicular, automatic transmissions include:
- Roller type which consists of spring loaded rollers between the inner and outer race of the one-way clutch. (Roller type is also used without springs on some applications); and
- Sprag type which consists of asymmetrically shaped wedges located between the inner and outer race of the one-way clutch.

The one-way clutches are typically used in the transmission to prevent an interruption of drive torque *(i.e.,* power flow) during certain gear shifts and to allow engine braking during coasting.

Controllable or selectable one-way clutches *(i.e.,* OWCs) are a departure from traditional one-way clutch designs. Selectable OWCs add a second set of locking members in combination with a slide plate. The additional set of locking members plus the slide plate adds multiple functions to the OWC. Depending on the needs of the design, controllable OWCs are capable of producing a mechanical connection between rotating or stationary shafts in one or both directions. Also, depending on the design, OWCs are capable of overrunning in one or both directions. A controllable OWC contains an externally controlled selection or control mechanism. Movement of this selection mechanism can be between two or more positions which correspond to different operating modes.

U.S. Patent No. 5,927,455 discloses a bi-directional overrunning pawl-type clutch, U.S. Patent No. 6,244,965 discloses a planar overrunning coupling, and U.S. Patent No. 6,290,044 discloses a selectable one-way clutch assembly for use in an automatic transmission.

U.S. Patent Nos. 7,258,214 and 7,344,010 disclose overrunning coupling assemblies, and U.S. Patent No. 7,484,605 discloses an overrunning radial coupling assembly or clutch.

A properly designed controllable OWC can have near-zero parasitic losses in the "off' state. It can also be activated by electro-mechanics and does not have either the complexity or parasitic losses of a hydraulic pump and valves.

Other related U.S. patent publications include: 2011/0140451; 2011/0215575; 2011/0233026; 2011/0177900; 2010/0044141; 2010/0071497; 2010/0119389; 2010/0252384; 2009/0133981; 2009/0127059; 2009/0084653; 2009/0194381; 2009/0142207; 2009/0255773; 2009/0098968; 2010/0230226; 2010/0200358; 2009/0211863; 2009/0159391; 2009/0098970; 2008/0223681; 2008/0110715; 2008/0169166; 2008/0169165; 2008/0185253; 2007/0278061; 2007/0056825; 2006/0252589; 2006/0278487; 2006/0138777; 2006/0185957; 2004/0110594; and the following U.S. patents: 7,942,781; 7,806,795; 7,695,387; 7,690,455; 7,491,151; 7,484,605; 7,464,801; 7,349,010; 7,275,628; 7,256,510; 7,223,198; 7,198,587; 7,093,512; 6,953,409; 6,846,257; 6,814,201; 6,503,167; 6,328,670; 6,692,405; 6,193,038; 4,050,560; 4,340,133; 5,597,057; 5,918,715; 5,638,929; 5,342,258; 5,362,293; 5,678,668; 5,070,978; 5,052,534; 5,387,854; 5,231,265; 5,394,321; 5,206,573; 5,453,598; 5,642,009; 6,075,302; 6,065,576; 6,982,502; 7,153,228; 5,846,257; 5,924,510; and 5,918,715.

A linear motor is an electric motor that has had its stator and rotor "unrolled" so that instead of producing a torque (rotation) it produces a linear force along its length. The most common mode of operation is as a Lorentz-type actuator, in which the applied force is linearly proportional to the current and the magnetic field. U.S. published application 2003/0102196 discloses a bi-directional linear motor. Other bi-directional linear motors or switchable linear actuator devices are known from US 5 827 148 and US 2012/0145505.

Linear stepper motors are used for positioning applications requiring rapid acceleration and high speed moves with low mass payloads. Mechanical simplicity and precise open look operation are additional features of stepper linear motor systems.

A linear stepper motor operates on the same electromagnetic principles as a rotary stepper motor. The stationary part or platen is a passive toothed steel bar extending over the desired length of travel. Permanent magnets, electro-magnets with teeth, and bearings are incorporated into the moving elements or forcer. The forcer moves bi-directionally along the platen, assuring discrete locations in response to the state of the currents in the field windings. In general, the motor is two-phase, however a larger number of phases can be employed.

The linear stepper motor is well known in the prior art and operates upon established principles of magnetic theory. The stator or platen component of the linear stepper motor consists of an elongated, rectangular steel bar having a plurality of parallel teeth that extends over the distance to be traversed and functions in the manner of a track for the so-called forcer component of the motor.

The platen is entirely passive during operation of the motor and all magnets and electromagnets are incorporated into the forcer or armature component. The forcer moves bi-directionally along the platen assuming discrete locations in response to the state of the electrical current in its field windings.

Mechanical forces that are due to local or distant magnetic sources, i.e. electric currents and/or permanent magnet (PM) materials, can be determined by examination of the magnetic fields produced or "excited" by the magnetic sources. A magnetic field is a vector field indicating at any point in space the magnitude and direction of the influential capability of the local or remote magnetic sources. The strength or magnitude of the magnetic field at a point within any region of interest is dependent on the strength, the amount and the relative location of the exciting magnetic sources and the magnetic properties of the various mediums between the locations of the exciting sources and the given region of interest. By magnetic properties one means material characteristics that determine "how easy" it is to, or "how low" a level of excitation is required to, "magnetize" a unit volume of the material, that is, to establish a certain level of magnetic field strength. In general, regions which contain iron material are much easier to "magnetize" in comparison to regions which contain air or plastic material.

Magnetic fields can be represented or described as three dimensional lines of force, which are closed curves that traverse throughout regions of space and within material structures. When magnetic "action" (production of measurable levels of mechanical force) takes place within a magnetic structure these lines of force are seen to couple or link the magnetic sources within the structure. Lines of magnetic force are coupled/linked to a current source if they encircle all or a portion of the current path in the structure. Force lines are coupled/linked to a PM source if they traverse the PM material, generally in the direction or the anti-direction of the permanent magnetization. Individual lines of force or field lines, which do not cross one another, exhibit levels of tensile stress at every point along the line extent, much like the tensile force in a stretched "rubber band," stretched into the shape of the closed field line curve. This is the primary method of force production across air gaps in a magnetic machine structure.

One can generally determine the direction of net force production in portions of a magnetic machine by examining plots of magnetic field lines within the structure. The more field lines (i.e. the more stretched rubber bands) in any one direction across an air gap separating machine elements, the more "pulling" force between machine elements in that given direction.

Metal injection molding (MIM) is a metalworking process where finely-powdered metal is mixed with a measured amount of binder material to comprise a 'feedstock' capable of being handled by plastic processing equipment through a process known as injection mold forming. The molding process allows complex parts to be shaped in a single operation and in high volume. End products are commonly component items used in various industries and applications. The nature of MIM feedstock flow is defined by a physics called rheology. Current equipment capability requires processing to stay limited to products that can be molded using typical volumes of 100 grams or less per "shot" into the mold. Rheology does allow this "shot" to be distributed into multiple cavities, thus becoming cost-effective for small, intricate, high-volume products which would otherwise be quite expensive to produce by alternate or classic methods. The variety of metals capable of implementation within MIM feedstock are referred to as powder metallurgy, and these contain the same alloying constituents found in industry standards for common and exotic metal applications. Subsequent conditioning operations are performed on the molded shape, where the binder material is removed and the metal particles are coalesced into the desired state for the metal alloy.

A clevis fastener is a three-piece fastener system consisting of a clevis, clevis pin, and tang. The clevis is a U-shaped piece that has holes at the end of the prongs to accept the clevis pin. The clevis pin is similar to a bolt, but is only partially threaded or unthreaded with a cross-hole for a cotter pin. The tang is the piece that fits between the clevis and is held in place by the clevis pin. The combination of a simple clevis fitted with a pin is commonly called a shackle, although a clevis and pin is only one of the many forms a shackle may take.

Clevises are used in a wide variety of fasteners used in the farming equipment, sailboat rigging, as well as the automotive, aircraft and construction industries. They are also widely used to attach control surfaces and other accessories to servos in model aircraft. As a part of a fastener, a clevis provides a method of allowing rotation in some axes while restricting rotation in others.

For purposes of this application, the term "coupling" should be interpreted to include clutches or brakes wherein one of the plates is drivably connected to a torque delivery element of a transmission and the other plate is drivably connected to another torque delivery element or is anchored and held stationary with respect to a transmission housing. The terms "coupling," "clutch" and "brake" may be used interchangeably.

### SUMMARY OF EXAMPLE EMBODIMENTS

An object of at least one embodiment of the present invention is to provide an electronic vehicular transmission which shifts quickly and quietly without the need for syncros, stepper motors, dog clutches, honed guide rods and cam drums of the prior art.

Another object of at least one embodiment of the present invention is to provide an overrunning, non-friction coupling and control assembly for use in the transmission and a switchable, linear actuator device for use in the assembly.

In carrying out the above objects and other objects of at least one embodiment of the present invention, a switchable, linear actuator device to control the operating mode of at least one non-friction coupling assembly is provided according to Claim 1.

The structures may be substantially circularly symmetric. The permanent magnet source may comprise an annular magnet. The annular magnet may be a rare earth magnet. The annular magnet may be axially magnetized.

The translator structure may include a pair of field redirection rings wherein the annular magnet is sandwiched between the field redirection rings.

Each coupling assembly may be a clutch assembly.

Each electromagnetic source may include an annular slot and a coil disposed in the slot. Each slot opens to the radial air gap.

Further in carrying out the above objects and other objects of at least one embodiment of the present invention, an overrunning, non-friction coupling and control assembly is provided according to Claim 7.

The magnetic actuator may include a permanent magnet source.

The assembly may be an overrunning clutch and control assembly.

### BRIEF DESCRIPTION OF THE DRAWINGS

FIGURE 1 is a schematic diagram of a prior art dual-clutch transmission having a single output shaft;
FIGURE 2 is a graph of percent torque transmitted versus time for a typical dual clutch transmission;
FIGURE 3 is a schematic diagram, partially broken away, of a six-speed electronic dual clutch transmission (EDCT) with a drawing of corresponding pitch line diameters;
FIGURE 4 is an enlarged portion of the diagram of Figure 3 showing a plurality of 2- and 3-position linear stepper motors that are independent of each other and which connect with an output shaft of the transmission;
FIGURE 5 is an enlarged schematic diagram, partially broken away, of one of the 3-position linear stepper motors and coupling assemblies of Figures 3 and 4 and constructed in accordance with at least one embodiment of the present invention;
FIGURE 6 is a schematic diagram of the stepper motor of Figure 5 magnetically latching two, 2-way controllable mechanical diodes (i.e. coupling assemblies);
FIGURE 7 is a schematic diagram, partially broken away, which shows how pre-selected gears get synched prior to engaging a 2-way coupling assembly *(i.e.,* mechanical diode);
FIGURE 8 is a schematic diagram, partially broken away, which shows the power or torque flows from a dual clutch module and an electric motor of the transmission for a 1-2 transmission shift;
FIGURE 9 is a schematic diagram, partially broken away, which shows a torque flow from the electric motor for a creep mode of the transmission;
FIGURE 10 is a schematic diagram, partially broken away, which shows torque flows from the clutch module and the electric motor is a launch mode of the transmission with an internal combustion engine (ICE) starter option;
FIGURE 11 is a schematic diagram, partially broken away, which shows torque flows from the clutch module and the electric motor in "idle off' and "hill hold";
FIGURE 12 is a top perspective view of a selectable solenoid insert (SSI) or electromechanical apparatus utilized in the "hill hold" mode with a locking member or strut in its extended coupling position;
FIGURE 13 is a side perspective sectional view of the apparatus of Figure 12 with the locking strut in its retracted uncoupling position;
FIGURE 14 is a schematic diagram, partially broken away, which shows torque flows from the clutch module and the electrical motor during a shift-assist option of the transmission;
FIGURE 15 shows graphs of torque versus time for the 1,3,5 clutch, the 2,4,6 clutch and the electrical motor *(i.e.* e-motor) when doing a shift-assist;
FIGURE 16 is a schematic diagram, partially broken away, which shows torque flows from the clutch module and the electric motor during e-motor boost and possible regenerative braking;
FIGURES 17a, 17b and 17c are schematic drawings with corresponding pitch line diameters showing different possible electric motor configurations or packaging options for at least one embodiment of the transmission; and
FIGURE 18 is a schematic diagram, partially broken away, of a rear wheel drive (RWD) 10-speed transmission and a drawing of corresponding pitch line diameters.

### DETAILED DESCRIPTION OF EXAMPLE EMBODIMENTS

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

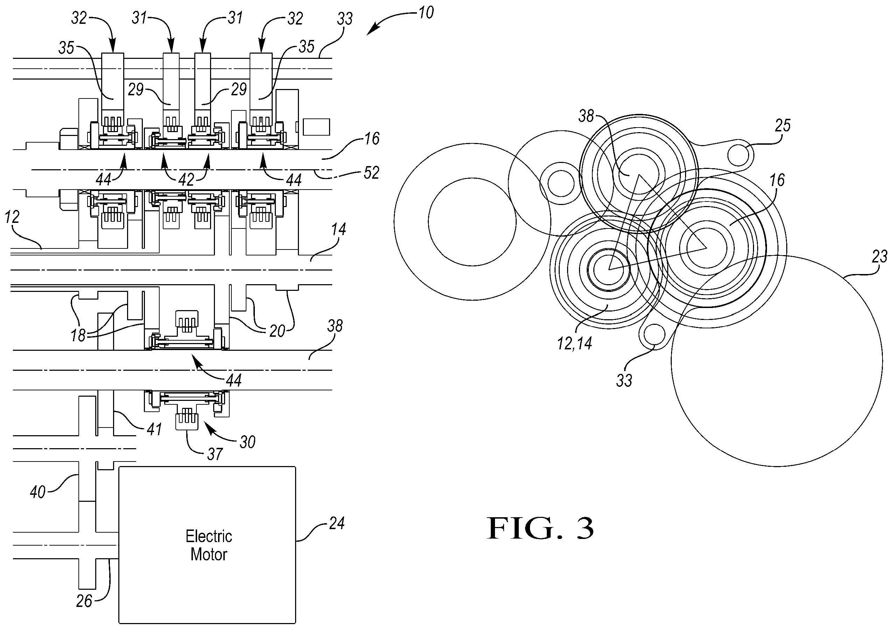

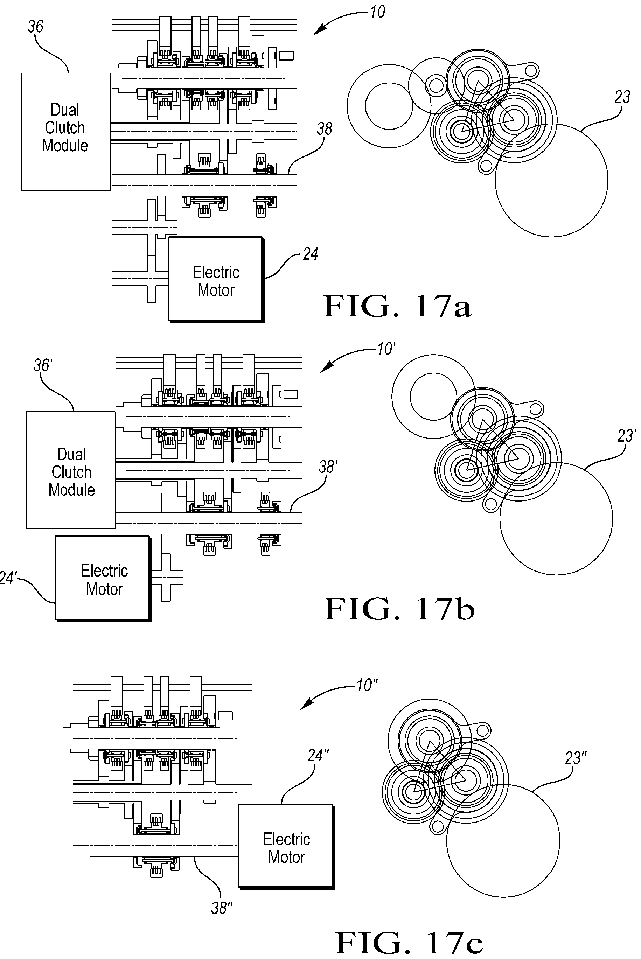

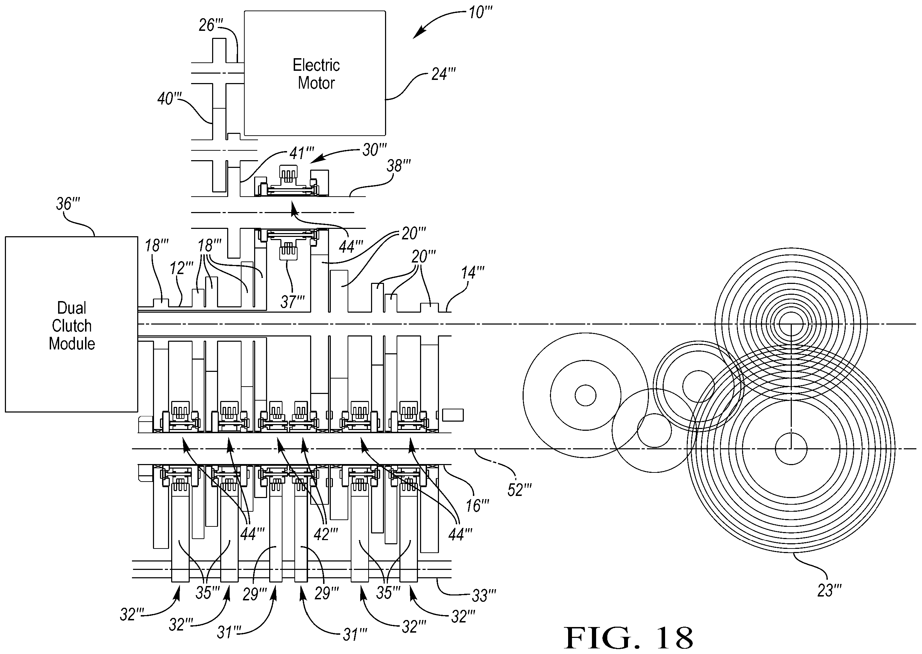

Figure 3 is a schematic diagram illustrating at least an embodiment of an electronic dual clutch transmission (EDCT), generally indicated at 10, of the present invention. Other embodiments are generally indicated at 10', 10" and 10‴ in Figures 17b, 17c and 18, respectively. The transmission 10 includes first and second input shafts 12 and 14, respectively, and a transmission output shaft 16. A first group 18 of forward gears (2^{nd}, 4^{th} and 6^{th}) is supported on the first input shaft 12 for rotation therewith. A second group 20 of forward gears (5^{th}, 3^{rd} and 1^{st}) is supported on the second input shaft 14 for rotation therewith.

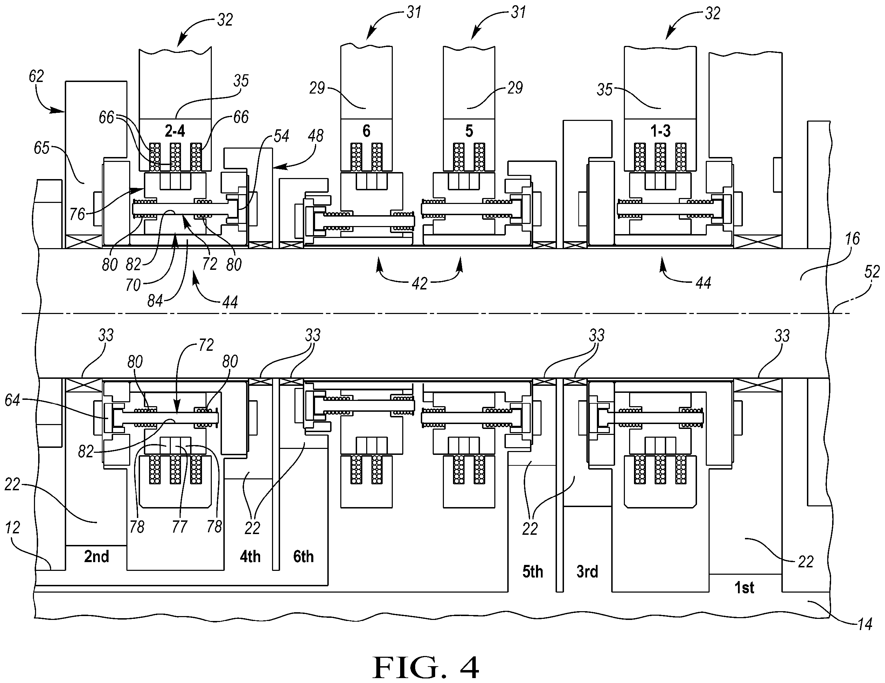

A third group 22 of forward gears (Figure 4) correspond to the first and second groups 18 and 20, respectively, of forward gears and connect with the output shaft 16 through coupling assemblies, generally indicated at 31 and 32. The third group 22 of gears are rotatably supported on the shaft 16 by bearings 33. The output shaft 16 is connected to a differential first drive 23 (Figure 3).

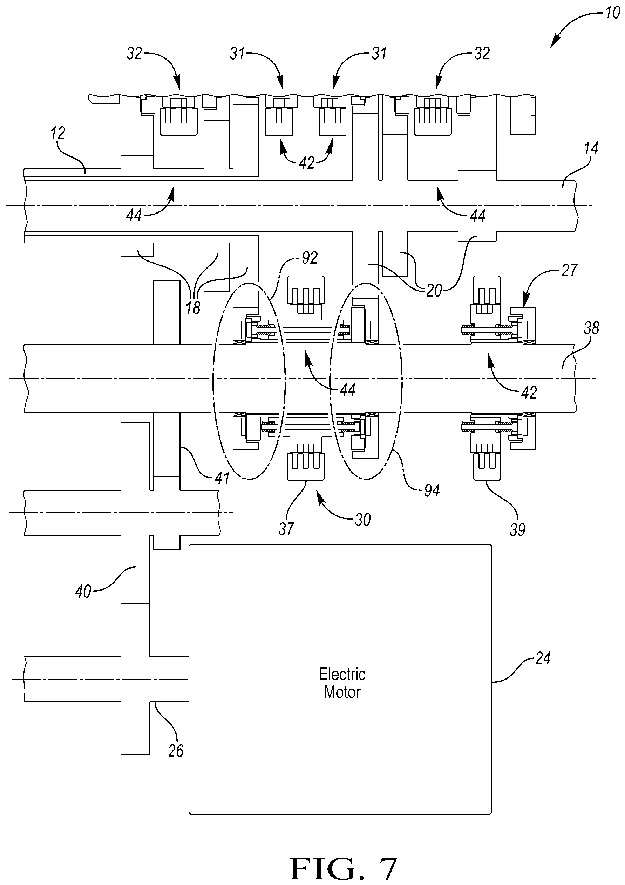

An electric motor 24 having an output shaft 26 connects with the input shafts 12 and 14 via coupling assemblies, generally indicated at 30 and 27 (Figures 7-11), for changing angular velocity of the input shafts 12 and 14 in response to an electrical signal during a shift to obtain a desired transmission ratio.

The non-friction, controllable, first coupling assembly 30 has a first coupling state for coupling the electric motor 24 to the first input shaft 12 and a second coupling state for coupling the electric motor 24 to the second input shaft 14. A sync/reverse rod 25 supports a stator subassembly 37 of the assembly 30 and a stator subassembly 39 of the assembly 27. The first coupling assembly 30 is non-hydraulically controlled to change state. A part of each of the coupling assemblies 30 and 27 is splined to the shaft 38 to rotate therewith.

The non-friction, controllable, second coupling assemblies 31 and 32 each have a first coupling state for coupling an input target gear on one of the input shafts 12 or 14 to an output target gear on the transmission output shaft 16 and a second coupling state for uncoupling the target gears. A part of each second coupling assembly 32 is splined to the output shaft 16 to rotate therewith. A stator subassembly 35 of each second coupling assembly 32 is supported on a 1-6 gear rod 33. A stator subassembly 29 of each second coupling assembly 31 is also supported on the rod 33. Each second coupling assembly 32 is non-hydraulically controlled.

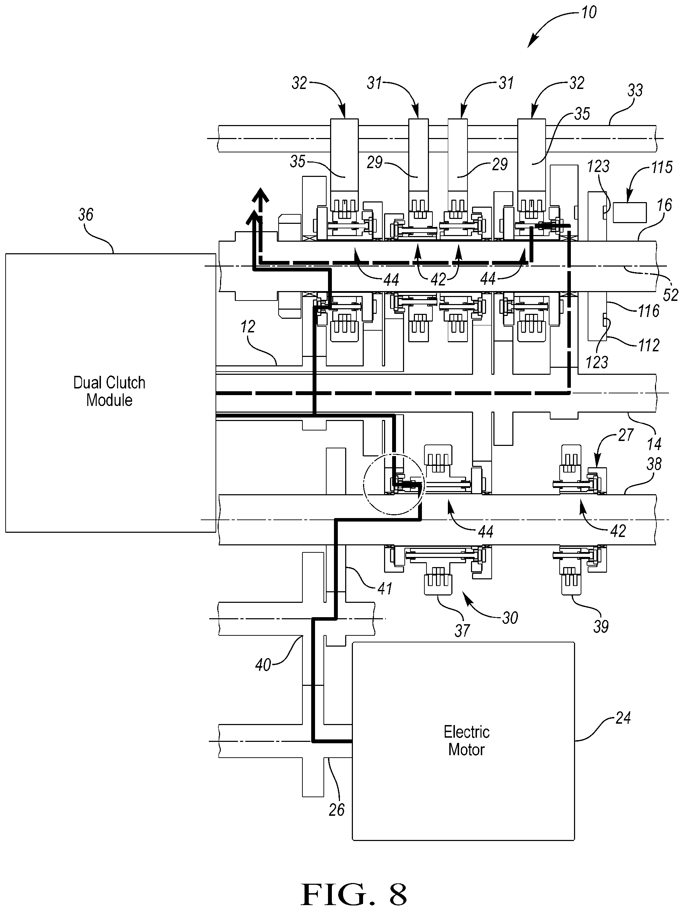

The motor 24 synchronizes shifts between transmission ratios described with reference to Figures 7 and 8.

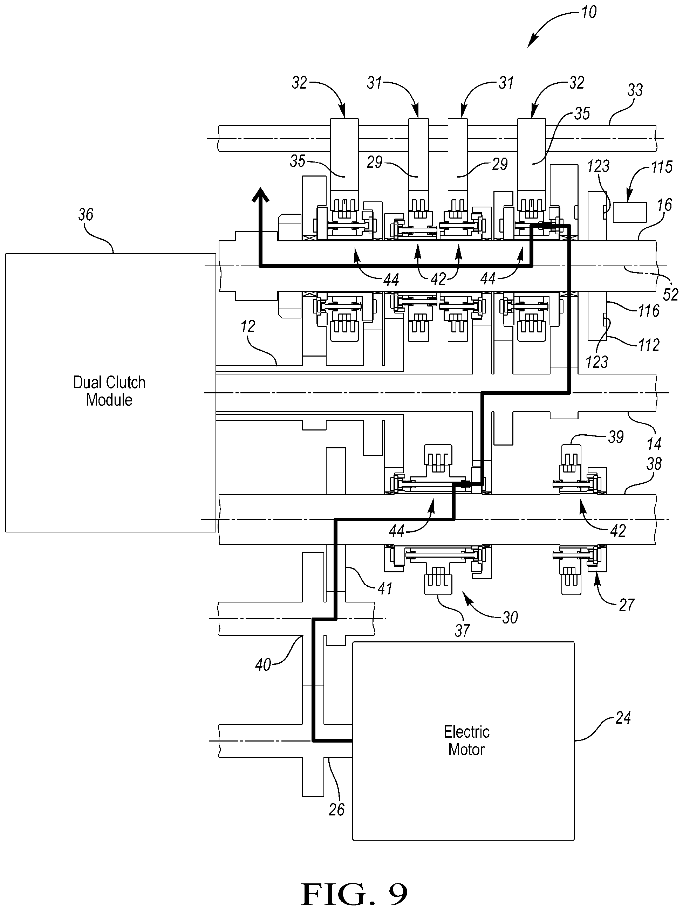

The transmission 10 has a creep mode wherein the motor 24 provides torque during the creep mode as described with reference to Figure 9.

The transmission 10 has a reverse mode wherein the motor 24 provides torque in the reverse mode as described with reference to Figure 9.

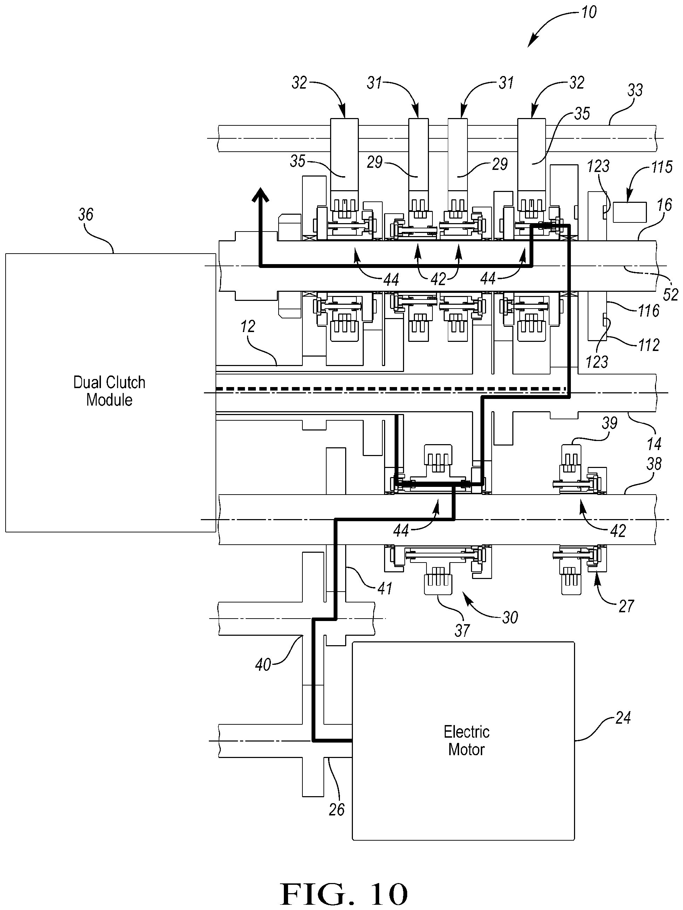

The transmission 10 has a launch mode wherein the motor 24 provides torque in the launch mode as described with reference to Figure 10.

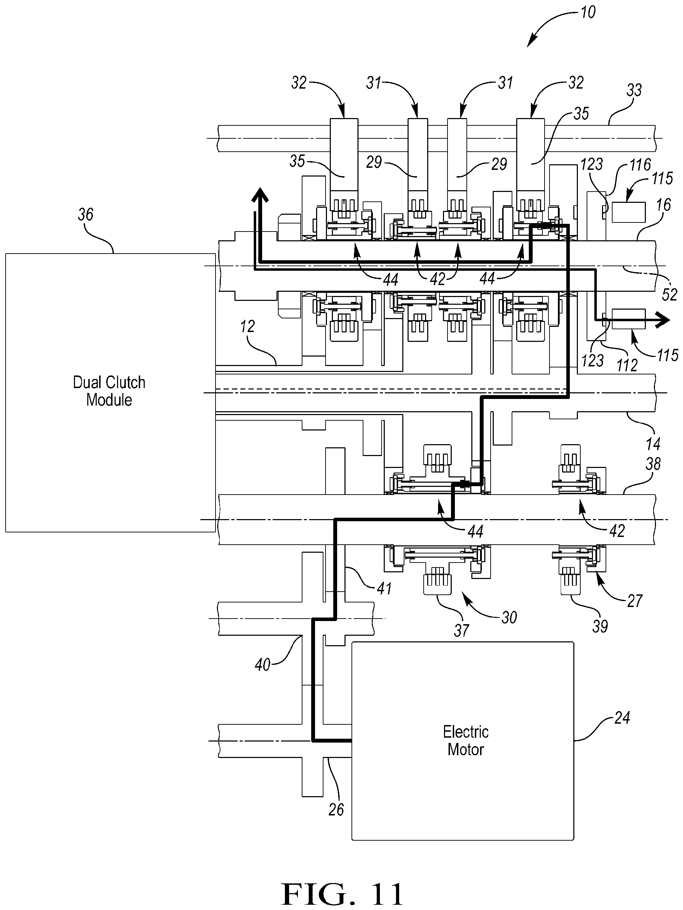

The motor 24 is utilized in idle-off operations in response to a control signal as described with reference to Figure 11.

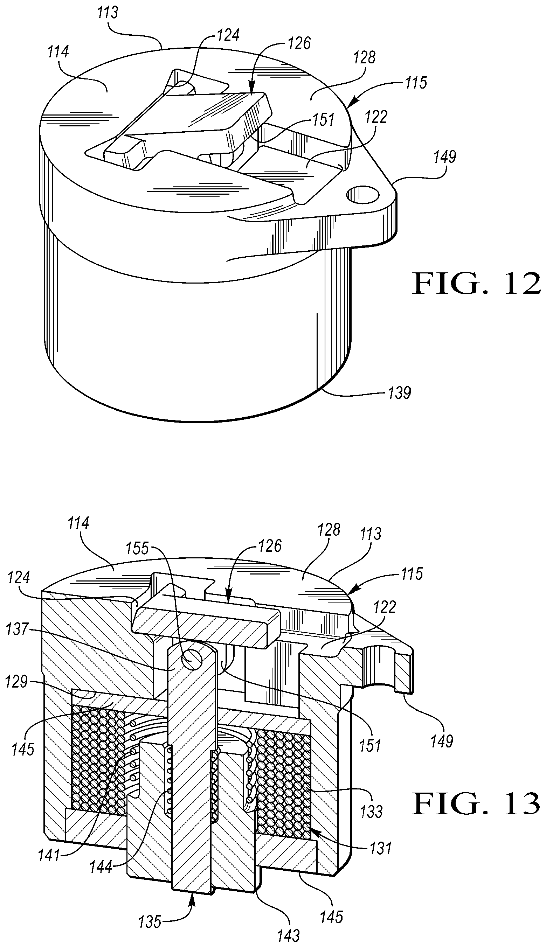

The transmission 10 further includes a non-friction, controllable, third coupling assembly (details in Figures 12 and 13), connecting with the transmission output shaft 16 via a plate 112 mounted on the shaft 16 and having a first coupling state for allowing forward vehicular movement and a second coupling state for grounding reverse vehicular movement as described with reference to Figure 11.

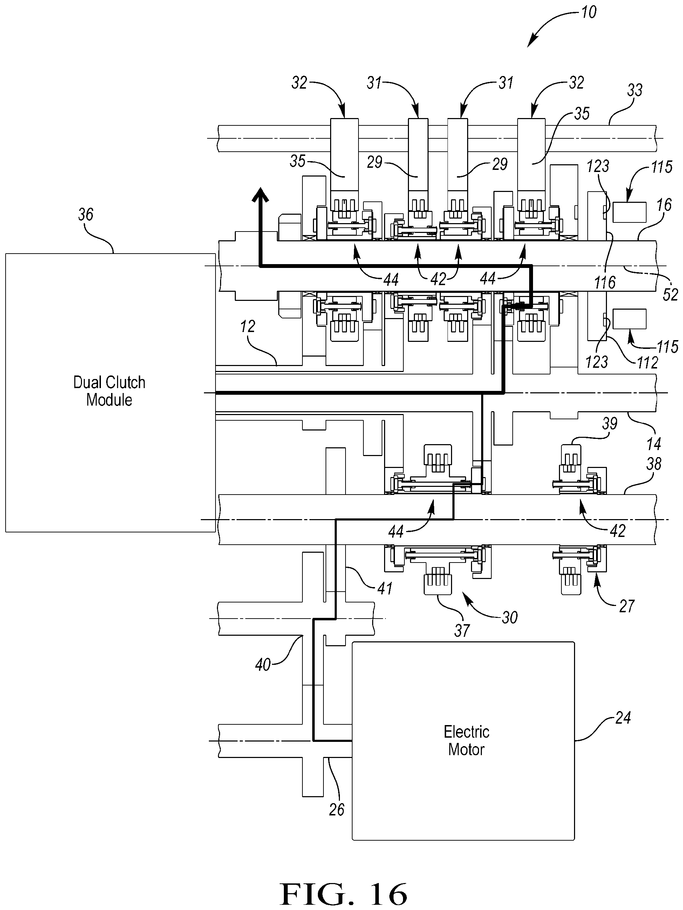

The motor 24 may be utilized for regenerative braking in response to a control signal as described with reference to Figure 16.

The motor 24 may be utilized in a torque boost operation as described with reference to Figure 16.

The transmission 10 is preferably an electronically-controlled, dual clutch transmission including a dual clutch module 36 such as the Luk-Dry dual clutch module of Figures 8-11 and 14, 16 and 18. The transmission 10' of Figure 17b has such a clutch module 36', the transmission 10" of Figure 17c, has such a clutch module (not shown) and the transmission 10‴ of Figure 18 has such a clutch module 36"'.

The transmission 10, further includes the synchronizing shaft 38 coupled to the output shaft 26 of the motor 24 via a gear train 40 such as a gear reduction train coupling the output shaft 26 of the motor 24 to the synchronizing shaft 38 through a gear 41 mounted on the shaft 38.

Referring again to Figures 3, 4 and 7, the second coupling assemblies 32 and the coupling assembly 30 typically each includes a 3-position linear stepper motor, generally indicated at 44, including the stator subassemblies 35 and 37, respectively. The coupling assemblies 31 and 27 each includes a 2-position linear stepper motor, generally indicated at 42, including the stator assemblies 29 and 39 that are independent of each other allowing any shift from odd to even and vice-versa.

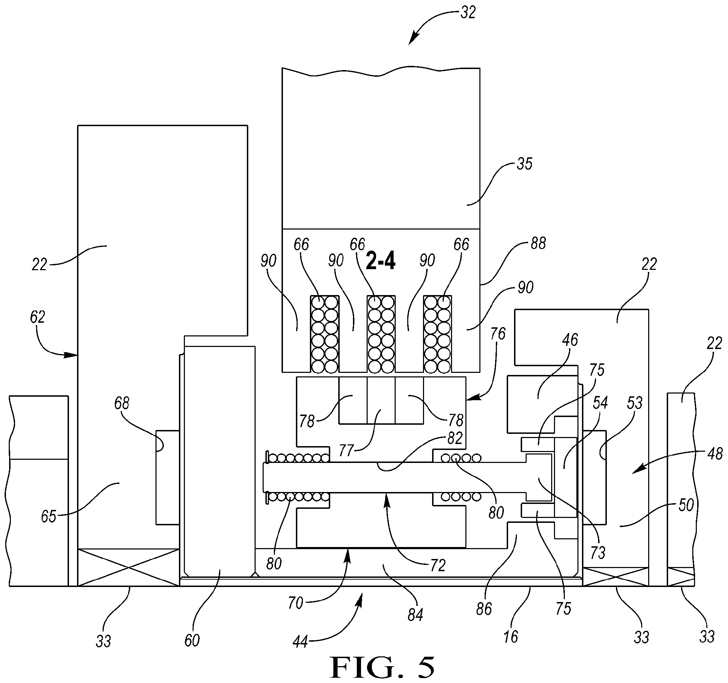

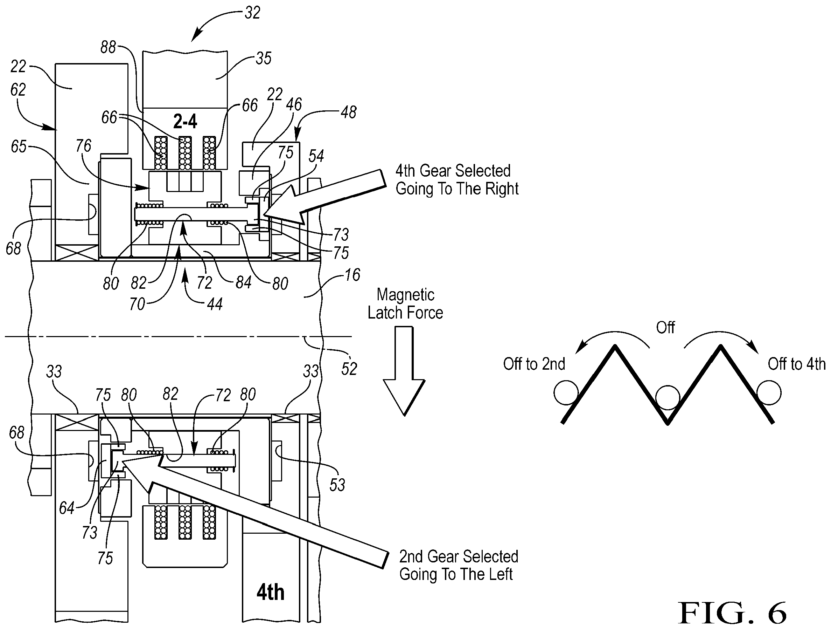

Referring to Figures 5 and 6, a preferred 3-position linear stepper motor assembly is generally indicated at 44 (a 2-position linear stepper motor is generally indicated at 10 in Figures 1 and 2 of U.S. provisional patent application No. 61/882,694 filed September 26, 2013 which is hereby incorporated in its entirety herein). Each 2-position linear stepper motor 42 is substantially the same in structure and function as the 3-position linear stepper motor 44. Consequently, only one of the motors 44 is described in detail hereinbelow.

The 3-position linear stepper motor 44 forms a part of each overrunning, non-friction coupling or clutch and control assembly 32.

The assembly 32 includes a first pair of coupling members or plates 46 and 48. The plate 46 is a pocket plate and the plate 48 is the powdered metal gear 22 integrated with a notch plate 50 which has notches 53. The plates 46 and 48 are supported for rotation relative to one another about a common rotational axis 52 of the output shaft 16. The plate 48 is supported on the shaft 16 by the bearing 33. A first locking member or strut 54 selectively mechanically couples the first pair of plates 46 and 48 together to prevent relative rotation of the first pair of plates 46 and 48 with respect to each other in at least one direction about the axis 52.

The assembly 32 also includes a second pair of coupling members or plates 60 and 62 supported for rotation relative to one another about the common rotational axis 52 and a second locking member or strut 64 (Figure 6) for selectively mechanically coupling the second pair of plates 60 and 62 together to prevent relative rotation of the second pair of plates 60 and 62 with respect to each other in at least one direction about the axis 52. The gear 22 is integrally formed with a plate 65 to form the plate 62 which has notches 68.

The stepper motor 44 includes the stator subassembly 35 including at least one coil 66 (three shown) to create an electromagnetically switched magnetic field and to create a magnetic flux when the at least one coil 66 is energized.

The stepper motor 44 further includes a magnetically-latching actuator subassembly, generally indicated at 70, including at least one bi-directionally movable connecting structure, such as spring-biased rods, generally indicated at 72. Each rod 72 is coupled to one of the first and second locking members 54 or 64 at an end portion 73 thereof for selective, small-displacement locking member movement. In particularly, each end portion 73 is pivotally connected to legs 75 of its locking member or strut 54 or 64 by pins (not shown but shown in the above mentioned provisional application).

The actuator subassembly 70 further includes a magnetic actuator, generally indicated at 76, coupled to the rods 72 and mounted for controlled reciprocating movement along the rotational axis 52 relative to the first and second pairs of coupling members 46, 48, 60 and 62 between a first extended position which corresponds to a first mode of the first pair of coupling members 46 and 48 and a second extended position which corresponds to a second mode of the second pair of coupling members 60 and 62. The first rod 72 actuates the first locking member 54 in its extended position, so that the first locking member 54 couples the first pair of coupling members 46 and 48 for rotation with each other in at least one direction about the rotational axis 52. The second rod 72 actuates the second locking member 64 to couple the second pair of coupling members 60 and 62 for rotation with each other in at least one direction about the rotational axis 52. The magnetic actuator 76 completes a path of the magnetic flux to magnetically latch in the first and second extended positions. A control force caused by the magnetic flux is applied to linearly move the magnetic actuator 76 between the first and second extended positions along the rotational axis 52.

The magnetic actuator 76 preferably includes a permanent magnet source 77 sandwiched between a pair of annular field redirection rings 78. The magnetic source 77 is preferably an annular, rare earth magnet which is axially magnetized.

In other words, the electromechanical apparatus or motor 44 controls the operating mode of a pair of coupling apparatus, each of which has drive and driven members supported for rotation relative to one another about the common rotational axis 52 of the output shaft 16. Each drive member may be a pocket plate 46 or 60 and the driven member may be a notch plate 50 or 65. Each coupling apparatus or assembly may include two struts 54 or 64 for selectively mechanically coupling the members of each coupling assembly together and change the operating mode of each coupling assembly. Preferably, the struts 54 and 64 are spaced at 90° and/or 180° intervals about the axis 52.

The apparatus or motor 44 includes the stator subassembly 35 which has one or more (preferably three) electromagnetically inductive coils 66 to create a first magnetic flux when the coils 66 are energized.

The apparatus or motor 44 also includes the actuator subassembly 70 adapted for coupling with the members or plates of both of the coupling apparatus to rotate therewith. The motor 44 is supported on the output shaft 16 for rotation relative to the coils 66 about the rotational axis 52. The motor 44 typically includes two or more bi-directionally movable rods 72. Each rod 72 has the free end 73 adapted for connection to a strut for selective, small-displacement, strut movement.

The motor 44 also includes the actuator 76 operatively connected to the rods 72 for selective bi-directional shifting movement along the rotational axis 52 between a first position of the actuator 76 which corresponds to a mode (*i.e.* 4^{th} gear) of the first coupling apparatus (plate 50 and plate 46) and a second position of the actuator 76 which corresponds to a mode (*i.e.* 2^{nd} gear) of the coupling apparatus (plate 60 and plate 65). The two rods 72 are spaced 180° apart from one another as shown in Figures 4 and 5. The different modes may be locked and unlocked *(i.e.* free wheeling) modes.

A first magnetic control force is applied to the actuator 76 when the at least one coil 66 is energized to cause the actuator 76 to move between its first, second, and neutral positions along the axis 52 as shown in the right hand side of Figure 6.

The motor 44 includes a pair of spaced biasing spring members 80 for each rod 72 for exerting corresponding biasing forces on the actuator 76 in opposite directions along the axis 52 when the actuator 76 moves between its first, second and third positions along the axis 52. The actuator 76 has a hole 82 for slideably receiving and retaining the connecting rods 72. When the actuator 76 moves, it pushes/pulls its respective springs between its faces and the ends of its corresponding rods 72.

The motor 44 includes a hub 84 adapted for coupling with plates 46 and 60 of the two coupling apparatus. The hub 84 is splined for rotation with the shaft 16 about the rotational axis 52. The hub 84 slidably supports the actuator 76 during corresponding shifting movement along the rotational axis 52.

The motor 44 includes of spaced stops, only one of which is shown at 86, supported on the hub 84 to define the first and second positions of the actuator 76.

The motor 44 also preferably includes a set of spaced guide pins (not shown) sandwiched between inner surface of the actuator 76 and an outer surface of the hub 84 and extending along the rotational axis 52. The inner surfaces and the outer surface have V-shaped grooves or notches (not shown) formed therein to hold the guide pins. The actuator 76 slides on the guide pins during shifting movement of the actuator 76 along the rotational axis 52. The guide pins pilot the actuator 76 on the hub 84. The hub 84 also distributes oil to the guide pins.

The stator subassembly 35 includes a ferromagnetic housing 88 having spaced apart fingers 90 and the electromagnetically inductive coils 66 housed between adjacent fingers 90.

The actuator 76 is an annular part having the magnetic annular ring 77 sandwiched between the pair of ferromagnetic backing rings 78. The magnetic control forces magnetically bias the fingers 90 and their corresponding backing rings 78 into alignment upon coil energization. These forces latch the actuator 76 in the two "on" positions and the "off" position. The rings are acted upon by the stator subassembly 35 to move the actuator 76.

A hollow cylindrical bushing (not shown) may slidably support each rod 76 in its aperture 82 during bi-directional shifting movement thereof.

Referring again to Figure 6, the 3-position linear stepper motor 44 is shown magnetically latching the 2-way clutch assemblies. In the upper portion of Figure 6, the fourth gear is selected for rotation going to the right. In the lower portion of Figure 6, the second gear is selected going to the left. As shown in the saw-tooth graph in Figure 6, the magnetic latch force is "off' in the center.

Referring to Figure 7, there is illustrated how pre-selected gears get synched prior to engaging their respective 2-way clutch assembly *(i.e.* mechanical diode (MD)).

The sync e-motor 24 *(i.e.* electric motor) can be connected in three ways:
- to the 2,4,6 input shaft 12 (as shown by ellipse 92)
- to the 1,3,5,R input shaft 14 (as shown by ellipse 94)
- neutral - disconnected from both shafts 12 and 14

The e-motor 24 will spin up the inactive input shaft to match the speed through the oncoming pre-selected gear to the output shaft 16. Once the speed is synced, the appropriate 3-position linear stepper motor 44 will turn on the 2-way MD *(i.e.,* mechanical diode) to engage the pre-selected gear with the output shaft 16.

Referring to Figure 8, there is illustrated a 1-2 shift of the transmission 10.
- In first gear, start of 1-2 shift
- 2,4,6 syncro clutch 30 is turned on (as indicated by the dashed circle) connecting the e-motor 24 to the 2,4,6 input shaft 12.
- E-motor 24 spins up oncoming 2,4,6 shaft 12 and gear, syncing the speed of the input shaft 12 to the output shaft 16 via second gear ratio.
- Second gear 2-way clutch is turned on (pre-selected) via 3-position linear stepper motor 44 locking the output gear to the 2,4,6 shaft second gear.
- E-motor 24 is turned off.
- Dual clutch module 36 clutch-to-clutch shift is executed.

Referring to Figure 9, there is illustrated a creep mode of the transmission 10.

The dual clutch module 36 is completely off. The electric motor 24 preferably has a couple of different overall ratios ranges, 50:1 to 63:1. The latter requires the e-motor 24 to spin between 2400 to 2500 RPM to achieve a vehicle speed of 3 mph. There is very fine control in this mode to modulate the vehicle creep speeds.

For reverse, the e-motor 24 could be run in the reverse direction while in first gear. The ICE *(i.e.,* internal combustion engine) could be running an upsized generator/alternator and run this in a serial hybrid mode allowing rock cycling via the e-motor 24. There is also a reverse gear for the ICE if not rock cycling.

Referring to Figure 10, there is illustrated a launch mode of the transmission 10 with an internal combustion engine (ICE) starter option.
- The dual clutch module 36 is completely off. The electric motor 24 would drive the vehicle from zero to a speed just prior to the 1-2 shift line.
- At that point, the 1,3,5 clutch of the module 36 would apply spinning up the ICE and starting it.
- A torque hand-off would take place between the ICE and the e-motor 24.
- The e-motor 24 would disconnect from the 1,3,5,R input shaft 14 and connect to the 2,4,6 input shaft 12 to prepare to pre-select second gear.

Referring to Figure 11, there is illustrated an idle off and hill hold feature.
- When the vehicle coasts down the first gear and is below 3 mph, a hill hold OWC solenoid, generally indicated at 115, comes on. Details of the solenoid 115 are shown in Figures 12 and 13. The hill hold OWC freewheels about the one or more axis 52.
- When the vehicle is below mechanical ratio of first gear and/or the brakes are applied, the clutches of the module 36 come off and the ICE is shut down. Reverse direction is grounded (HH).
- The e-motor 24 should already be connected to the 1,3,5 input shaft 14 when a 2-1 was conducted. It is ready to creep or launch. Some minimum torque should be applied if the brake is not applied to creep.

Referring to Figures 12 and 13, there is generally illustrated an SSI (selectable solenoid insert) or the solenoid 115.

As disclosed in U.S. serial No. 61/870,434, a planar, controllable coupling assembly is disclosed. The assembly includes a first coupling member, the notch plate or member 112 (Figures 8-11), a second coupling member (not shown) and the electromechanical apparatus 115. The coupling assembly may be a ratcheting, 1-way clutch assembly. The first member 112 includes a coupling face 116 in closed-spaced opposition with an outer coupling face 114 of a housing part 113 of the solenoid 115 when the first and second members are assembled and held together by a locking or snap ring (not shown). The member 112 is mounted on the output shaft 16 for rotation about the common rotational axis 52.

The outer coupling face 114 of the housing part 113 has a single, T-shaped recess or pocket 122. The recess 122 defines a load-bearing first shoulder 124. The second coupling face 116 of the notch plate 112 has a plurality of recesses or notches 123. Each notch of the notches 123 defines a load-bearing second shoulder.

The electromechanical apparatus or solenoid 115 may include a locking strut or element, generally included at 126, disposed between the coupling faces 114 and 116 of the housing part 113 and the member 112, respectively, when the member 112 is assembled with the member holding the apparatus 115.

The element 126 may comprise a metal locking element or strut movable between first and second positions. The first position is characterized by abutting engagement of the locking element 126 with a load-bearing shoulder of the member 112 and the shoulder 124 of the pocket 122 (Figure 12) formed in an end wall 128 of the housing part 113. The second position is characterized by non-abutting engagement of the locking element 126 with a load-bearing shoulder of at least one of the member 112 and the end wall 128 (Figure 13).

Alternatively, the element 126 may be an impact energy storage element or synthetic rubber strut, to dampen the rotation between the member 112 and the member holding the apparatus 115.

The electromechanical apparatus 115 includes the housing part 113 which has a closed axial end including the end wall 128. The end wall 128 has the outer coupling face 114 with the single pocket 122 which defines the load-bearing shoulder 124 which is in communication with an inner face 129 of the end wall 128. The housing part 113 may be a powdered metal or aluminum (MIM) part.

The apparatus 115 also includes an electromagnetic source, generally indicated at 131, including at least one excitation coil 133 which is at least partially surrounded by the housing part 115.

The element or strut 126 is received within the pocket 122 in a retracted, uncoupling position (Figure 13). The strut 126 is movable outwardly from the pocket 122 to an extended, coupling position (Figure 12) characterized by abutting engagement of the strut 126 with a load-bearing shoulder of the notch plate 112.

The apparatus 115 also includes a reciprocating armature, generally indicated at 135, arranged concentrically relative to the at least one excitation coil 133 and is axially movable when the at least one excitation coil 133 is supplied with current. The armature 135 is connected at its leading end 137 to the element 126 to move the element 126 between its coupling and uncoupling positions.

When the element of the apparatus 115 is the rigid locking element 126, the element 126 controls the operating mode of the coupling assembly. When the element of the apparatus 115 is the previously described impact energy storage element, the element absorbs and stores impact energy to reduce undesirable noise and contact stress caused by a transition between operating modes of the coupling assembly.

Whether the element or strut is a locking element or an energy storage element, the element is pivotally connected to the leading end 137 of the armature 135 wherein the armature 135 pivotally moves the element within the pocket 122 in response to reciprocating movement of the armature 135.

The apparatus 115 also preferably includes a return spring 141, upper and lower plates 145, a spring 144, and a hollow tube 143. The coil 133 is wound about the tube 143 between the plates 145. The armature 135 reciprocates within the hollow tube 143. The spring 141 and the tube 143 return the armature 135 to its home position when the coil 133 is de-energized, thereby returning the element 126 to its uncoupling position. In other words, at least one return biasing member in the form of the return spring 141 urges the armature 135 through the plate 145 to a return position which corresponds to the uncoupling position of the element 126. The spring 144 biases the armature 135 towards the coupling position.

The housing may also include a stamped metal cup which preferably has holes to allow oil to circulate within the housing. Preferably, the at least one coil 133, the housing part 113, the cup and the armature 135 comprise a low profile solenoid. The locking element 126 may be a metal injection molded (i.e. MIM) strut.

When the storage element is a synthetic rubber strut, it may include a rigid insert and an elastomeric outer covering layer, bonded to the insert. The outer covering layer may be molded over the insert in a thermoset injection molding process. The storage element may carry high temperature-resistant elastomeric material defining opposite end sections of the storage element. One of the end sections is configured to deflect upon abutting engagement with the shoulder 124 and the other end section deflects upon engagement with a shoulder of the notch plate 112.

The housing part 115 has an apertured attachment flange 149 or possibly two apertured attachment flanges to attach the apparatus 115 to the coupling member (not shown) of the coupling assembly.

The element 126 includes at least one and, preferably, two projecting leg portions 151 which provide an attachment location for the leading end 137 of the armature 135. Each leg portion 151 has an aperture (not shown). The apparatus 115 further comprises a pivot pin 155 received within each aperture to allow rotational movement of the element 126 in response to reciprocating movement of the armature 135 wherein the leading end 137 of the armature 135 is connected to the element 126 via the pivot pin 155.

Preferably, each aperture is an oblong aperture which receives the pivot pin 155 to allow both rotation and translational movement of the element 126 in response to reciprocating movement of the armature 135.

Each locking strut 126 may comprise any suitable rigid material such as metal, (i.e. steel). In accordance with at least one embodiment of the invention, each storage strut may comprise any suitable base polymer that displays rubber-like elasticity, such as an unsaturated or saturated rubber material including, but not limited to, a nitrile rubber such as a hydrogenated nitrile butadiene rubber (HNBR). The storage struts are configured to dampen rotation and, consequently, engagement noise of the clutch assembly. For example, a portion or portions of each storage strut such as the end portion and/or middle portions of each storage strut may comprise one or more elastomeric materials, and the remainder of each storage strut may comprise a metal, such as the metal steel insert.

Generally, each of the storage elements carries resilient material defining the opposite end sections of the storage element. Each storage element is movable between coupling and uncoupling positions between the member 112 and the end wall 128 of the housing part 113. The coupling position is characterized by abutting engagement of the opposite end sections with respective shoulders of the member 112 and the end wall 128. The uncoupling position is characterized by non-abutting engagement of one of its end sections with at least one of the members 112 and the end wall 128. Each end section is configured to deflect or compress upon abutting engagement with respective shoulders of the member 112 and the end wall 128.

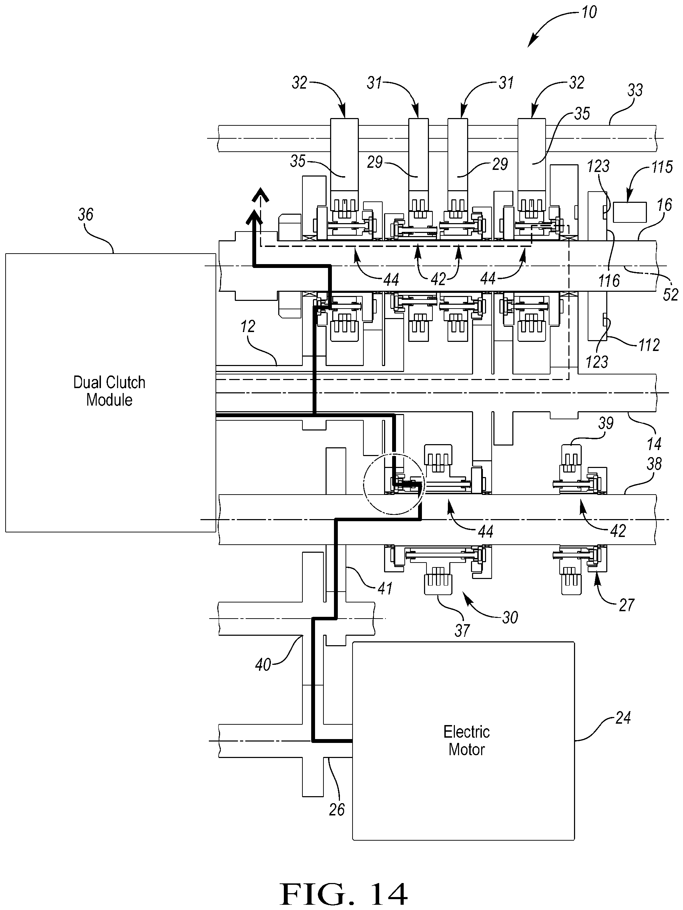

Referring to Figure 14, there is illustrated a shift-assist option of the transmission 10.
- In first gear, start of 1-2 shift
- 2,4,6 syncro clutch of clutch module 36 is turned on connecting e-motor 24 to 2,4,6 input shaft 12.
- E-motor 24 spins up oncoming 2,4,6 shaft 12and gear, syncing the speed of the input shaft 12 to the output shaft 16 via second gear ratio.
- Second gear 2-way clutch 32 is turned on via its 3-position linear stepper motor 44 locking the output gear to the 2,4,6 shaft 12 second gear.
- E-motor 24 starts to drive the vehicle, ICE starts to wane.
- The 1,3,5 clutch of the module 36 turns off as the e-motor 24 takes over driving the vehicle
- The ICE then speed matches the 2,4,6 input shaft 12 and the 2,4,6 clutch of the module 36 applies and a power hand-off occurs with the e-motor 24 and ICE.

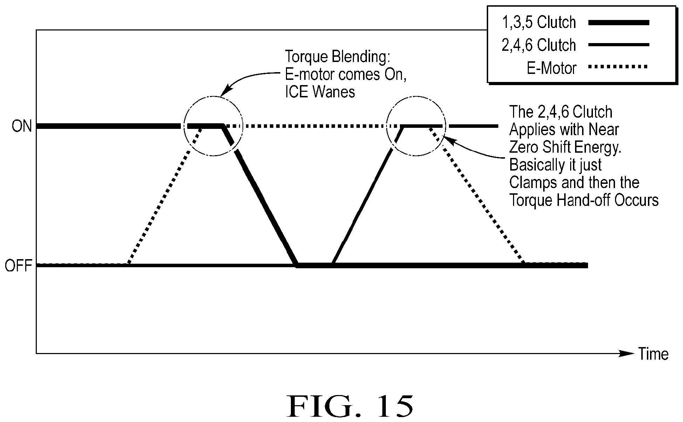

Referring to Figure 15 there are illustrated graphs of percent torque versus time by the 1,3,5 clutch of the module 36, the 2,4,6 clutch of the module 36 and the e-motor 24 during the shift-assist option. The left-most arrow indicates torque blending. The e-motor 24 comes on, the ICE wanes. The right-most arrow indicates the 2,4,6 clutch of the module 36 applies with near zero shift energy, basically it just clamps and then the torque hand-off occurs.

The theory is to eliminate shift energy in the dry clutches of the module 36 and to improve shift quality. Instead of doing a clutch-to-clutch shift, two, e-motor-to-clutch shifts are done without torque interruption. Controlling the e-motor 24 is much easier than controlling a friction clutch. These assisted shifts if used would most likely be limited to the larger step shifts, *i.e.* the 1-2 and 2-3.

Referring to Figure 16, there is illustrated e-motor boost, fill-in performance holes (parallel operation) and regenerative braking via the power or torque flow lines.

In this case, the vehicle is in third gear. For example, a one liter ICE in one car model has complaints in performance at engine speeds below 2000+ RPM. Also, there are complaints about the amount of time it takes to downshift the transmission to get the wanted torque increase. With an EDCT of at least one embodiment of the present invention, gear state can be maintained and the e-motor 24 can be turned on for instant torque boost.

In addition, with the e-motor 24 having a direct path to the output, regenerative braking is also possible.

Referring to Figures 17a, 17b and 17c, there are illustrated different configurations for the electrical motor (e-motor) at 24, 24' and 24", respectively. The e-motors 24, 24' and 24" can have one or two or no gear reductions to the sync shaft 38, 38' or 38", respectively. There are many packaging options.
- The drop from the selected input shaft to the differential 23, 23' or 23" matches the powershift drop.
- The center distance from the input to the differential 23, 23' or 23" centerline matches.
- The six gear ratios are identical to the powershift ratios. The rough concept drawings on the right parts of Figures 17a, 17b and 17c are to scale and show pitch line diameters.

Referring to Figure 18, there is illustrated a rear wheel drive (RWD) 10-speed transmission 10‴.

In an EV/Switch Hybrid Reverse Option of the transmission 10 (Figure 3), by using the electric motor 24 exclusively for rev (first gear with e-motor 24 spinning backwards), then the two gears, 2-position linear motor 42, reverse 2-way clutch can all be eliminated. Rock cycling power for the e-motor 24 can be from two sources:
1) The battery (not shown) of the vehicle; and
2) ICE with upsized alternator/generator.

The latter option works like a serial hybrid. The ICE is disconnected from the wheels via the transmission 10 and just runs an alternator/generator that powers the e-motor 42. This option results in a shorter stack (shorter shafts, smaller case).

The advantages of of the vehicle transmission are numerous and include:
• Added Modes:

| | |
|---|---|
| Creep Mode | shudder/NVH and over-heating friction clutch eliminated, easier to park |
| Electric Launch | shudder/NVH fix, fuel economy, performance |
| Idle Off | Fuel economy, NVH |
| Coast Of | Fuel economy |
| Hill Hold | Less complexity, saves clutches/brakes |
| Engine Starter | cost, eliminates starter and flexes sync E-motor |
| Shift Assist | Durability, shift quality |
| Performance Boost | Less downshifting, fixes torque hole in ICE |
| EV/Serial Hybrid Rev | Allows for rock cycling, eliminates hardware |

• Eliminated complex electro-mechanical systems:

| | |
|---|---|
| Replaced with simpler electro-mechanical system | cost |
| More reliable solid state solution -vs-mechanical | reliability |
| Easier to manufacture and assemble, less complex | cost |

- Fuel Economy:
- The purpose of a DCT is to get manual transmission type efficiencies with automatic shifting. The EDCT does that and much more. Idle off, electric launch, hill hold, boost, and electric creep all are more efficient over a conventional DCT.

• Mild Hybrid:
- Applicable to RWD as well and capable of more ratios (7 speed, 9 speed, 10 speed)

• Cost:
- A lot of expensive hardware is eliminated but there are some add-on costs such as sync motor, more battery capacity, upsized alternator, and all the linear stepper motors and associated hardware

• Pre-selected gears times are much faster
• More flexible shifting sequence - any odd to any even gear and vice-versa (1-4, 1-6, 2-5, 3-6, 4-1, 5-2, 6-3, 6-1)
• More durable, reliable, no more stepper motors getting "lost", no binding of shift forks, no friction material (syncros) to wear out, much more direct actuation of gear clutches
• A big advantage is that the majority of the TGWs complaints from customers are eliminated
- No more roll back on hill
- Precise control in creep mode (linear pedal), easier to park, no more shudder or lurches
- Poor acceleration off the line - electric launch has instant and high torque on demand
- Shudder and launch NVH issues (jerking, grinding)
- Shift flare/shift bump
- Durability and reliability issues

The following are parts eliminated by using at least one embodiment of the present invention:
- Synchronizers (cone clutches)
   - All associated parts like the block, ball detent, spring
- 2 stepper motors (MAM)
   - Gear train (3 reductions x 2)
   - Drums x 2
   - Shift rods, forks, linkages to drum
   - Dog clutches
- One output shaft (instead of two)
- Complexity of gears significantly reduced and less wide
- Engine starter system

Also, there are multiple model options based on e-motor sizing and function:
Option I - Base: smallest e-motor with a 50 to 63:1 ratio (power shift replacement option)
   - Used for synchronizing the pre-selected gears
   - Creep mode (forward and reverse)
   - Hill hold
Option II - Premium: small to medium sized e-motor (significant improvement in final economy and function over base option)
   - Option I +
   - Idle off
   - Electric launch
   - ICE starter - eliminate ICE starter, cost/weight savings
   - All electric reverse - cost savings and enables rock cycling
   - More battery capacity/upsized alternator
Option III - Ultimate: medium + sized motor (20-30 Kw), mild hybrid (with performance and shift quality enhancements)
   - Option II +
   - Electric boost (parallel operation, torque on demand)
   - Shift assist
   - Regen (this could be an option II function as well)
   - More battery capacity/upsized alternator

While exemplary embodiments are described above, it is not intended that these embodiments describe all possible forms of the invention. Rather, the words used in the specification are words of description rather than limitation, and it is understood that various changes may be made without departing from the scope of appended claims.

## Claims

1. A switchable linear actuator device (44) to control the operating of first and second non-friction coupling assemblies, the device comprising:
a stator structure (35) including at least one electromagnetic source (66) to create an electronically-switched magnetic field; and
a translator structure (70) including a magnetically-latching, permanent magnet source (77) magnetically coupled to the stator structure across a radial air gap and supported for translational movement relative to the stator structure along an axis between a plurality of predefined, discrete, axial positions including a first extended position which corresponds to an operating mode of the first coupling assembly and a second extended position which corresponds to an operating mode of the second coupling assembly, the translator structure being configured to translate along the axis between the different positions upon experiencing a net translational force comprising a first translational force caused by energization of the at least one electromagnetic source and a magnetic latching force based upon linear position of the permanent magnet source along the axis, the device being **characterised in that** the the translator structure is further including first and second bi-directionally moveable, spring-biased connecting rods (72), the first connecting rod being coupled to a first locking element of the first coupling assembly, and the second connecting rod being coupled to a second locking element of the second coupling assembly.

2. The device as claimed in claim 1, wherein the structures (35, 70) are substantially circularly symmetric.

3. The device as claimed in claim 1, wherein the permanent magnet source (77) comprises an annular magnet.

4. The device as claimed in claim 3, wherein the translator structure (70) includes a pair of field redirection rings (78) and wherein the annular magnet (77) is sandwiched between the field redirection rings.

5. The device as claimed in claim 1, wherein each coupling assembly is a clutch assembly.

6. The device as claimed in claim 2, wherein each electromagnetic source (66) includes an annular slot and a coil disposed in the slot, each slot opening to the radial air gap.

7. An overrunning, non-friction coupling and control assembly (32) comprising:
a first pair of coupling members (46, 48) supported for rotation relative to one another about a common rotational axis, and a first locking member (54) for selectively mechanically coupling the first pair of coupling members together to prevent relative rotation of the first pair of coupling members with respect to each other in at least one direction about the axis;
a second pair of coupling members (60, 62) supported for rotation relative to one another about the common rotational axis and a second locking member (64) for selectively mechanically coupling the second pair of coupling members together to prevent relative rotation of the second pair of coupling members with respect to each other in at least one direction about the axis;
a stator subassembly (35) including at least one coil (66) to create an electromagnetically switched magnetic field and to create a magnetic flux when the at least one coil is energized; and
**characterised by** further comprising
a magnetically-latching actuator subassembly (70) including first and second bi-directionally movable, spring-biased connecting rods (72), the first connecting rod being coupled to the first locking member and the second connecting rod being coupled to the second locking member for selective, small-displacement locking member movement, the actuator subassembly further including a magnetic actuator (76) coupled to the connecting rods and mounted for controlled reciprocating movement along the rotational axis relative to the first and second pairs of coupling members between a first extended position which corresponds to a first mode of the first pair of coupling members and a second extended position which corresponds to a second mode of the second pair of coupling members, the first connecting rod actuating the first locking member and the second connecting rod actuating the second locking member in the extended positions, respectively, so that the first locking member couples the first pair of coupling members for rotation with each other in at least one direction about the rotational axis and the second locking member couples the second pair of coupling members for rotation with each other in at least one direction about the rotational axis, the magnetic actuator completing a path of the magnetic flux to magnetically latch in the first and second extended positions, wherein a control force caused by the magnetic flux is applied to linearly move the magnetic actuator between the first and second extended positions along the rotational axis.

8. The assembly as claimed in claim 7, wherein the magnetic actuator (76) includes a permanent magnet source (77).

9. The assembly as claimed in claim 7, wherein the assembly is an overrunning clutch and control assembly.

## Patentansprüche

1. Schaltbare Linearaktuatorvorrichtung (44) zum Steuern des Betriebs einer ersten und einer zweiten reibungsfreien Kopplungsanordnung, wobei die Vorrichtung umfasst:
eine Statorstruktur (35), beinhaltend mindestens eine elektromagnetische Quelle (66) zum Erzeugen eines elektronisch geschalteten Magnetfeldes; und
eine Translatorstruktur (70), beinhaltend eine magnetisch einrastende Permanentmagnetquelle (77), die über einen radialen Luftspalt magnetisch mit der Statorstruktur gekoppelt ist und für Translationsbewegung relativ zur Statorstruktur entlang einer Achse zwischen einer Vielzahl von vordefinierten, diskreten, axialen Positionen gehalten wird, einschließlich einer ersten ausgefahrenen Position, die einem Betriebsmodus der ersten Kopplungsanordnung entspricht, und einer zweiten ausgefahrenen Position, die einem Betriebsmodus der zweiten Kopplungsanordnung entspricht, wobei die Translatorstruktur dafür ausgelegt ist, sich entlang der Achse zwischen den verschiedenen Positionen translatorisch zu bewegen, wenn sie eine Nettotranslationskraft erfährt, die eine erste Translationskraft, die durch Erregung der mindestens einen elektromagnetischen Quelle verursacht wird, und eine magnetische Einrastkraft umfasst, die auf der linearen Position der Permanentmagnetquelle entlang der Achse basiert,
wobei die Vorrichtung **dadurch gekennzeichnet ist, dass** die Translatorstruktur ferner erste und zweite bidirektional bewegliche, federbelastete Verbindungsstangen (72) beinhaltet, wobei die erste Verbindungsstange mit einem ersten Verriegelungselement der ersten Kopplungsanordnung gekoppelt ist und die zweite Verbindungsstange mit einem zweiten Verriegelungselement der zweiten Kopplungsanordnung gekoppelt ist.

2. Vorrichtung nach Anspruch 1, wobei die Strukturen (35, 70) im Wesentlichen kreisförmig symmetrisch sind.

3. Vorrichtung nach Anspruch 1, wobei die Permanentmagnetquelle (77) einen Ringmagneten umfasst.

4. Vorrichtung nach Anspruch 3, wobei die Translatorstruktur (70) ein Paar von Feldumlenkungsringen (78) beinhaltet und der Ringmagnet (77) zwischen den Feldumlenkungsringen angeordnet ist.

5. Vorrichtung nach Anspruch 1, wobei jede Kopplungsanordnung eine Kupplungsanordnung ist.

6. Vorrichtung nach Anspruch 2, wobei jede elektromagnetische Quelle (66) einen ringförmigen Schlitz und eine im Schlitz eingerichtete Spule beinhaltet, wobei sich jeder Schlitz zum radialen Luftspalt hin öffnet.

7. Freilaufende, reibungsfreie Kopplungs- und Steuerungsanordnung (32), umfassend:
ein erstes Paar von Kopplungselementen (46, 48), die relativ zueinander um eine gemeinsame Drehachse drehbar gelagert sind, und ein erstes Verriegelungselement (54) zum selektiven mechanischen Koppeln des ersten Paares von Kopplungselementen miteinander, zu dem Zweck, relative Drehung des ersten Paares von Kopplungselementen in Bezug aufeinander in mindestens einer Richtung um die Achse zu verhindern;
ein zweites Paar von Kopplungselementen (60, 62), die relativ zueinander um die gemeinsame Drehachse drehbar gelagert sind, und ein zweites Verriegelungselement (64) zum selektiven mechanischen Koppeln des zweiten Paares von Kopplungselementen miteinander, zu dem Zweck, relative Drehung des zweiten Paares von Kopplungselementen in Bezug aufeinander in mindestens einer Richtung um die Achse zu verhindern;
eine Statorunteranordnung (35), beinhaltend mindestens eine Spule (66) zum Erzeugen eines elektromagnetisch geschalteten Magnetfeldes und zum Erzeugen eines magnetischen Flusses, wenn die mindestens eine Spule erregt wird; und **dadurch gekennzeichnet, dass** sie ferner umfasst:
eine magnetisch einrastende Aktuatorunteranordnung (70), beinhaltend erste und zweite bidirektional bewegliche, federgespannte Verbindungsstangen (72), wobei die erste Verbindungsstange mit dem ersten Verriegelungselement gekoppelt ist und die zweite Verbindungsstange mit dem zweiten Verriegelungselement zur selektiven Verriegelungselementbewegung mit geringer Verschiebung gekoppelt ist, die Aktuatorunteranordnung ferner einen magnetischen Aktuator (76) beinhaltet, der mit den Verbindungsstangen gekoppelt und für gesteuerte Hin- und Herbewegung entlang der Drehachse relativ zum ersten und dem zweiten Paar von Kopplungselementen zwischen einer ersten ausgefahrenen Position, die einem ersten Modus des ersten Paares von Kopplungselementen entspricht, und einer zweiten ausgefahrenen Position, die einem zweiten Modus des zweiten Paares von Kopplungselementen entspricht, montiert ist, wobei die erste Verbindungsstange das erste Verriegelungselement und die zweite Verbindungsstange das zweite Verriegelungselement jeweils in den ausgefahrenen Positionen betätigt, so dass das erste Verriegelungselement das erste Paar von Kopplungselementen zur Drehung miteinander in mindestens einer Richtung um die Drehachse koppelt und das zweite Verriegelungselement das zweite Paar von Kopplungselementen zur Drehung miteinander in mindestens einer Richtung um die Drehachse koppelt, der magnetische Aktuator einen Pfad des magnetischen Flusses vervollständigt, um in der ersten und der zweiten ausgefahrenen Position magnetisch einzurasten, wobei eine durch den magnetischen Fluss verursachte Steuerkraft aufgebracht wird, um den magnetischen Aktuator zwischen der ersten und der zweiten ausgefahrenen Position entlang der Drehachse linear zu bewegen.

8. Anordnung nach Anspruch 7, wobei der magnetische Aktuator (76) eine Permanentmagnetquelle (77) beinhaltet.

9. Anordnung nach Anspruch 7, wobei die Anordnung eine Freilaufkupplungs- und Steueranordnung ist.

## Revendications

1. Dispositif à actionneur linéaire commutable (44) destiné à commander le fonctionnement de premier et second ensembles de couplage sans friction, le dispositif comprenant :
une structure de stator (35) comprenant au moins une source électromagnétique (66) pour créer un champ magnétique à commutation électronique ; et
une structure de translation (70) comprenant une source d'aimant permanent à verrouillage magnétique (77) en couplage magnétique avec la structure de stator à travers un entrefer radial et supportée pour un déplacement en translation par rapport à la structure de stator le long d'un axe entre une pluralité de positions axiales discrètes prédéfinies comprenant une première position étendue qui correspond à un mode de fonctionnement du premier ensemble de couplage et une seconde position étendue qui correspond à un mode de fonctionnement du second ensemble de couplage, la structure de translation étant conçue pour effectuer une translation le long de l'axe entre les différentes positions après avoir subi une force de translation nette comprenant une première force de translation causée par la mise sous tension de l'au moins une source magnétique et une force de verrouillage magnétique basée sur la position linéaire de la source d'aimant permanent le long de l'axe,
le dispositif étant **caractérisé en ce que** la structure de translation comprend en outre des première et seconde bielles polarisées par ressort mobiles bidirectionnellement (72), la première bielle étant couplée à un premier élément de verrouillage du premier ensemble de couplage, et la seconde bielle étant couplée à un second élément de verrouillage du second ensemble de couplage.

2. Dispositif selon la revendication 1, dans lequel les structures (35, 70) sont sensiblement circulaires et symétriques.

3. Dispositif selon la revendication 1, dans lequel la source d'aimant permanent (77) comprend un aimant annulaire.

4. Dispositif selon la revendication 3, dans lequel la structure de translation (70) comprend une paire de bagues de redirection de champ (78) et dans lequel l'aimant annulaire (77) est pris en sandwich entre les bagues de redirection de champ.

5. Dispositif selon la revendication 1, dans lequel chaque ensemble de couplage est un ensemble d'embrayage.

6. Dispositif selon la revendication 2, dans lequel chaque source électromagnétique (66) comprend une fente annulaire et une bobine est disposée dans la fente, chaque fente s'ouvrant sur l'entrefer radial.

7. Ensemble de commande et de couplage sans friction à dépassement (32) comprenant :
une première paire d'éléments de couplage (46, 48) supportés en rotation l'un par rapport à l'autre autour d'un axe de rotation commun, et un premier élément de verrouillage (54) pour un couplage mécanique sélectif de la première paire d'éléments de couplage pour empêcher la rotation relative de la première paire d'éléments de couplage l'un par rapport à l'autre dans au moins une direction autour de l'axe ;
une seconde paire d'éléments de couplage (60, 62) supportés en rotation l'un par rapport à l'autre autour d'un axe de rotation commun et un second élément de verrouillage (64) pour un couplage mécanique sélectif de la seconde paire d'éléments de couplage pour empêcher la rotation relative de la seconde paire d'éléments de couplage l'un par rapport à l'autre dans au moins une direction autour de l'axe ;
un sous-ensemble stator (35) comprenant au moins une bobine (66) pour créer un champ magnétique à commutation électromagnétique et pour créer un flux magnétique lorsque l'au moins une bobine est mise sous tension ; et
**caractérisé en ce qu'**il comprend en outre
un sous-ensemble actionneur à verrouillage magnétique (70) comprenant des première et seconde bielles polarisées par ressort mobiles bidirectionnellement (72), la première bielle étant couplée au premier élément de verrouillage et la seconde bielle étant couplée au second élément de verrouillage pour un mouvement par petit déplacement sélectif de l'élément de verrouillage, le sous-ensemble actionneur comprenant en outre un actionneur magnétique (76) couplé aux bielles et monté pour un déplacement en va-et-vient commandé le long de l'axe de rotation par rapport aux première et seconde paires d'éléments de couplage entre une première position étendue qui correspond à un premier mode de la première paire d'éléments de couplage et une seconde position étendue qui correspond à un second mode de la seconde paire d'éléments de couplage, la première bielle actionnant le premier élément de verrouillage et la seconde bielle actionnant le second élément de verrouillage dans les positions étendues, respectivement, de sorte que le premier élément de verrouillage couple la première paire d'éléments de couplage l'un avec l'autre en rotation dans au moins une direction autour de l'axe de rotation et le second élément de verrouillage couple la seconde paire d'éléments de couplage l'un avec l'autre en rotation dans au moins une direction autour de l'axe de rotation, l'actionneur magnétique effectuant un trajet du flux magnétique pour un verrouillage magnétique dans les première et seconde positions étendues, dans lequel une force de commande causée par le flux magnétique est appliquée pour déplacer linéairement l'actionneur magnétique entre les première et seconde positions étendues le long de l'axe de rotation.

8. Ensemble selon la revendication 7, dans lequel l'actionneur magnétique (76) comprend une source d'aimant permanent (77).

9. Ensemble selon la revendication 7, dans lequel l'ensemble est un ensemble de commande et d'embrayage à dépassement.
